(19) Europäisches Patentamt / European Patent Office / Office européen des brevets

(11) **EP 2 697 510 B1**

(12) **EUROPEAN PATENT SPECIFICATION**

(45) Date of publication and mention
of the grant of the patent:
**11.03.2015 Bulletin 2015/11**

(21) Application number: **12722855.9**

(22) Date of filing: **11.04.2012**

(51) Int Cl.:
***F03G 6/06*** *(2006.01)*

(86) International application number:
**PCT/IB2012/051758**

(87) International publication number:
**WO 2012/140575 (18.10.2012 Gazette 2012/42)**

(54) **METHOD FOR DIMENSIONING A SOLAR GENERATION SYSTEM, AND THE SOLAR GENERATION SYSTEM OBTAINED**

VERFAHREN ZUR DIMENSIONIERUNG EINER SOLARANLAGE UND AUF DIESE WEISE HERGESTELLTE SOLARANLAGE

PROCÉDÉ DE DIMENSIONNEMENT D'UN SYSTÈME GÉNÉRATEUR SOLAIRE ET SYSTÈME GÉNÉRATEUR SOLAIRE OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2011 IT RM20110181**

(43) Date of publication of application:
**19.02.2014 Bulletin 2014/08**

(73) Proprietor: **Deltae S.r.l.
87036 Rende (IT)**

(72) Inventors:
• **LOMBARDO, Giuseppe
I-87036 Rende (IT)**

• **ABATE, Salvatore
I-84012 Angri (IT)**
• **DESIDERIO, Giovanni
I-87046 Montalto Uffugo (IT)**
• **BARBERI, Riccardo
I-87036 Rende (IT)**

(74) Representative: **Paparo, Aldo
Bugnion S.p.A.
Via Vellani Marchi, 20
41124 Modena (IT)**

(56) References cited:
| | |
|---|---|
| WO-A1-00/07055 | US-A- 4 135 367 |
| US-A- 4 236 383 | US-A- 4 707 990 |
| US-A1- 2004 031 517 | US-A1- 2006 207 650 |

**Description**

Technical field

The present invention relates to a system for receiving solar radiation reflected by a solar concentrator and to the respective dimensioning method thereof. In particular, the receiving system has the purpose of adapting the distribution of a solar radiation reflected by a primary reflector on to an absorber of a Stirling engine contained in the interior of a secondary reflector. The heat absorber is advantageously dimensioned in respect of both form and weight so as to guarantee the stable operation of the Stirling engine in transient conditions of predefined duration, wherein said solar radiation is insufficient to guarantee the steady-state operation of the engine.

State of the art

The Stirling engine is a closed-circuit, external-combustion thermal engine that uses a gas as a thermodynamic fluid, usually air, nitrogen or helium in the high-yield variants: the latter is shown to be highly versatile by comparison with different heat sources. The Stirling engine is composed of one or more cylinders in which one or more pistons glide following the expansion and contraction of the thermodynamic fluid. Alternatively, the gas flows from a heat exchanger and a cold exchanger after being passed from a heat regenerator: the corresponding harmonic movement of the pistons can produce electrical energy via a mechanical-electrical converter.

The heat is generally supplied to the heat exchanger, which is positioned at one extremity of the cylinder/s and provides for heating of the internal thermodynamic fluid, which sets the piston/s in motion.

The heat exchanger is usually formed from a plurality of fins made of a material having good thermal conductivity or from a plurality of small conductors in which the operating fluid flows.

The regenerator alternatively absorbs and restores heat from/to the operating fluid and increases the transformational efficiency. The cold exchanger, which constitutes the low-temperature source, is usually a compound-tube, crossover flow exchanger, in which the tubes are externally lapped by refrigerating water, while the operating fluid flows within the tubes.

The fact that the Stirling engine is a combustion engine is advantageous because the heat can be supplied externally from a vast range of fuels, even ones of low calorific value.

One highly widespread application of the Stirling engine provides for production of the heat source by combusting natural gas.

Another application provides for the use of the Stirling engine for the production of renewable-source electrical energy, and in particular by means of the uptake and possible accumulation of heat obtained from solar radiation for the purpose of defining said hot spot within the engine.

To this extent, the use of the Stirling engine is divided between applications in which the heat is given up to a vector fluid and transported thereby to the head of one or more Stirling engines, and applications in which the engine head is directly exposed to the solar radiation. This implies that the engine is aligned along a focusing axis of a reflective mirror, the said primary reflector. The receiving system thus comprises an absorber, directly mounted on the head of the Stirling engine, and a secondary reflector, pre-arranged about the absorber for the purpose of limiting the losses due to radiation emitted by said absorber, which can reach temperatures very close to 500°C.

Examples of this type of application are given in US6735946, US7026722 and WO2010/045269.

In WO2010/045269, in particular, there is evidence of problems relating to possible overheating of the engine head, which problems are resolved by rotating the engine about the focusing axis, in such a way as to distribute the radiation over a wider area of the head.

US2004031517 describes a system in which the absorption head of the Stirling engine is out of focus, in particular, it is at a greater distance from the primary reflector that its own focus.

Whilst this solution improves the distribution of the heat over the head of the Stirling engine, it does not prove satisfactory in terms of stabilising the operation of the engine.

It is in fact observed that during transient conditions in which the sky clouds over, the engine can shut down even in the case of transients of low irradiation lasting only a few seconds.

For the purpose of stabilising this behaviour, the known art tends to oversize the primary reflector to make provision for variability of insolation, allowing slight operation of the engine in conditions of little or average radiation, but in the case of excessive irradiation, the engine tends to overheat and even to sustain damage. Hence the various systems for preserving the engine from overheating.

Conversely, by reducing the surface area of the primary reflector, the engine tends to shut down as soon as the solar radiation decreases, even transiently, for example during cloud passage.

According to another aspect, free-piston Stirling engines of small size are known that are optimised to operate by means of natural gas combustion, guaranteeing optimum efficiency. An example of similar engines is given by WO2005/054654. Because these engines have witnessed a great development in the sphere of gas combustion, this has entailed an inevitable perfecting of said engines, which are especially reliable and efficient.

WO 0007055 is considered to be the closest prior art.

Summary of the invention

The present invention proposes to teach the sizing of a solar generator directly and/or indirectly exposed to solar radiation in such a way as to overcome the above-mentioned limitations of the known art.

A subject of the present invention is a method for dimensioning a solar generator directly exposed to solar radiation, according to claim 1.

According to the present invention, the absorber is dimensioned in such a way as to possess a thermal capacity such as to guarantee the operation of the engine even when the solar radiation is insufficient to power the steady-state operation of the engine.

A further aim of the present invention is to demonstrate an advantageous juxtaposition of the absorber, relative to the primary reflector of a solar system, in such a way as to overcome the above-mentioned problems of the known art.

Also a subject of the present invention is an absorber and a solar generator that is dimensioned according to the present invention.

According to a first variant of the invention, the totality of the solar radiation reflected by the primary reflector impinges upon the absorber directly, that is, without reflections, which absorber is positioned at a first distance interval relative to the focal point of the primary reflector.

According to a second variant of the invention, a portion of the solar radiation reflected by the primary reflector impinges upon the absorber directly, while a residual portion is reflected by means of the secondary reflector onto the absorber. At that moment, the absorber is positioned at a second distance interval, relative to the focal point of the primary reflector. This second distance interval can at least partially overlap said first distance interval.

The present invention is especially suitable for the dimensioning of systems suited to the use of Stirling engines of small size, that is, requiring heat flows of less than 50 Watt/cm$^2$.

According to a further aspect of the present invention, a method is described of controlling solar tracking, now made possible by the arrangements related to dimensioning of the absorber and of the generator in general as described herein.

The claims describe preferred embodiments of the invention, forming an integral part of the present description.

Description of the drawings

Further characteristics and advantages of the invention will become more evident in the light of the detailed description of, albeit non-exclusive, embodiments and methods for a system for receiving solar radiation, which is illustrated by way of a non-limiting example with the aid of the combined design tables, wherein:

Fig. 1 represents a diagrammatic axial cross-section of the receiving system that is the subject of the present invention,
Fig. 2 represents the characteristic operating curves of a Stirling engine of small size used in the invention,
Fig. 3 represents an axial cross section of part of the system of Fig. 1,
Fig. 4 represents two variants of the receiving system according to the present invention,
Fig. 5 represents a schematic construction of an axial cross-section of Fig. 4.
Fig. 6 represents the absorber axial cross-section of one of the variants of Fig, 4.

Identical letters and identical reference numerals in the figures identify identical members or components, even in different variants.

Detailed description of the invention

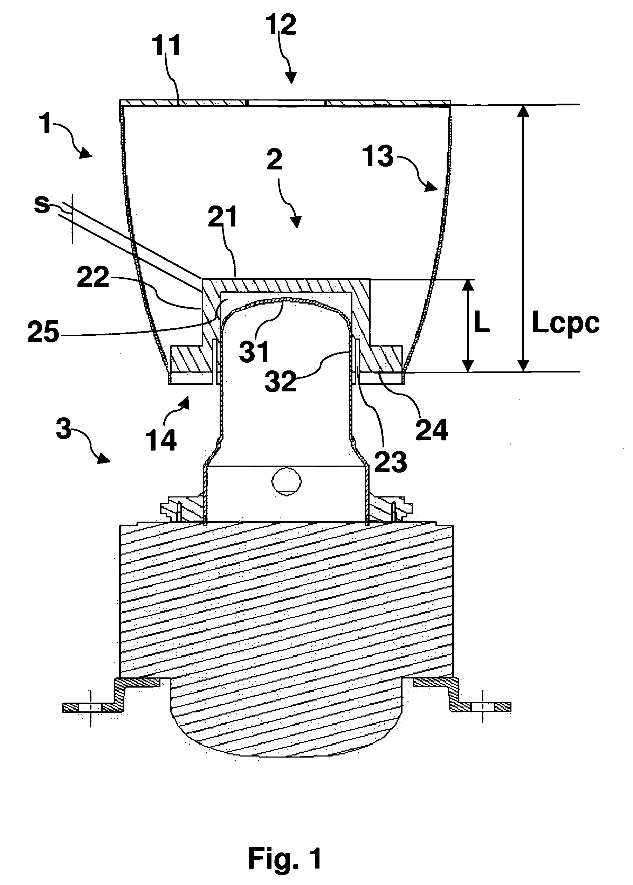

With reference to Figure 1, the receiving system comprises a secondary reflector 1 and an absorber 2.

The absorber 2 is directly associated with a head 31 of a Stirling engine 3.

The head 31 is generally cylindrical, proving suitable for being associated with a paraboloid primary reflector 4, which defines a focusing axis and a focal distance F for focusing.

The absorber 2 is tasked with picking up the light radiation and transferring the heat to an annular zone around the head 31 of the engine, alongside a heat exchanger 32. Therefore the absorber comprises at least one cavity 25 complementary with the head 31 of the engine.

According to the present invention, the absorber 2 is dimensioned, not only as a solar-energy uptake member and conveyor of thermal energy. According to the present invention, the absorber 2 is dimensioned in such a way as to guarantee stable operation of the Stirling engine, in the event of a reduction in the intensity of minimum reflected radiation necessary for the correct operation of the engine. In particular the latter is dimensioned in such a way as to function as a thermal capacitor, that is, so as to provide the heat necessary for starting the engine and for stabilising the temperature of the annular heat exchanger 32 of the engine head.

At steady-state operation, the absorber 2 is advantageously capable of compensating for variations in solar radiation captured by the primary reflector, and therefore by the receiving system.

To determine the thermal capacity of the absorber effectively, it is necessary to determine empirically on a test bench the characteristic absorption and productivity curves of the converter upon variations in the temperature present at the interface between the absorber 2 and the heat exchanger 32 (or operating temperature).

The thermodynamic converter used in the tests conducted is a free-piston Stirling engine produced by Microgen™ for operation by combusting natural gas, and is suitable for producing both electric power and thermal power by means of direct heating of the cooling water entering the engine.

With the use of known mathematical techniques for minimising the mean square error between the measured data for electrical power produced Pe, thermal power produced Pt and thermal power absorbed Pabs as a function of the temperature T operating at the interface between absorber 2 and the heat exchanger 32 of the Stirling engine 3 and the interpolating graphs of measured data, are obtained the following curves:

- the electrical production curve Pe(T);
- the thermal production curve Pt(T);
- the thermal absorption curve Pabs(T),

where T indicates the operating temperature of the converter.

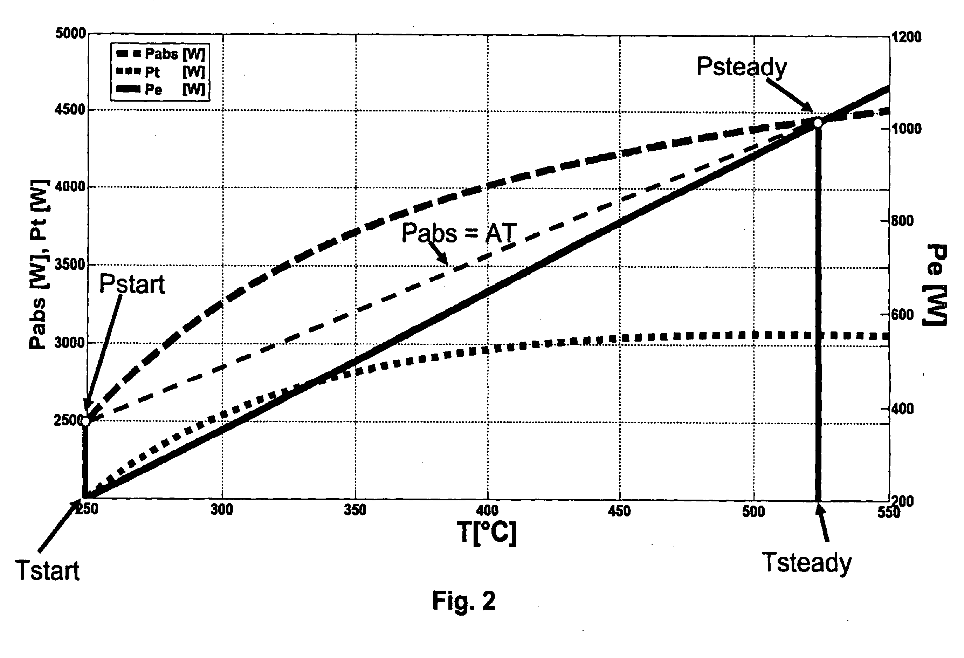

Fig. 2 shows the respective curves for the Microgen™ converter used as an example. In particular, it is shown that:

- The Stirling engine necessitates absorption of a thermal power Pstart for start-up and necessitates absorption of a power of Psteady to supply, in the steady state, the maximum electrical and thermal power; normally Pstart ≤ Psteady;
- The temperature Tstart is the temperature present at the interface between the absorber 2 and the heat exchanger 32 when the power absorbed by the Stirling engine is Pstart;
- The temperature Tsteady is the temperature present at the interface between the absorber 2 and the heat exchanger 32 when the power absorbed by the Stirling engine is Psteady; normally Tsteady ≥ Tstart;
- At the temperature Tstart, the engine supplies the minimum electrical and thermal power.
- At the temperature Tsteady, the engine supplies the maximum electrical and thermal power.

Therefore starting up the engine and maintaining it in operation requires a quantity of heat dQ or a corresponding useful power $P_u = dQ/dt$, in such a way as to:

- Start up the thermodynamic converter and maintain it in operation,
- sufficiently heat the heat absorber such that, in the absence of concentrated solar radiation, the amount of heat accumulated to excess, succeeds in maintaining the thermodynamic cycle in operation for a predefined interval of time δt.

Such characterisation of the Stirling engine can be provided by the manufacturer of the engine itself, or by predisposing a heater of known thermal power in contact with the engine head, and arranging a temperature sensor at the interface between the engine head and the heater. These operations are known, and in any case are accessible to the person skilled in this sector.

According to the present invention, a suitable energy balancing equation of the receiving system is the following:

$$\text{Pric} = \text{Piner} + \text{Pabs} + \text{Ploss} \qquad\qquad (e1)$$

where

- Pric is the power entering the secondary reflector,
- Piner is the thermal power accumulated by the heat absorber, and
- Ploss are the thermal losses of the receiving system.

From this we deduce that the useful power for operating the thermodynamic system is:

$$P_u = Pric - Ploss \quad \text{that is,} \quad P_u = Pabs + Piner$$

The heat absorber is dimensioned for functioning as a *thermal capacitor,* that is, it stores the energy necessary for starting up the Stirling engine and supplies the heat necessary for maintaining the Stirling engine in operation when the amount of heat, due to the concentrated solar radiation, is insufficient for the optimum operation of the converter. In particular, Piner is expressed by:

$$Piner = C_{thermal}*dT/dt \qquad (e2)$$

where T is the temperature of the interface between absorber 2 and heat exchanger 32 and $C_{thermal}$ is the thermal capacity of the absorber 2.

Using the expression (e2) and making $P_u$ = Pabs + Piner = 0, that is, the solar radiation is insufficient to supply the thermal energy Psteady to the absorber, the following is obtained:

$$\frac{dT}{dt} = -\frac{Pabs}{C_{thermal}} \qquad (e3)$$

In particular, by resolving the non-linear differential equation (e3), the characteristic thermal capacity value $C_{thermal}$ of the absorber is found to be such that the system thereby remains turned on, for a defined interval of time $\delta t$, notwithstanding that the solar radiation may be insufficient to maintain the absorber at the temperature Tsteady.

According to the present invention it is assumed that the power absorbed by the thermodynamic converter is approximating by a linear curve of the type Pabs = AT, in which case (e3) may be rewritten as follows:

$$\frac{dT}{dt} = -\frac{AT}{C_{thermal}} \qquad (e4)$$

for which the close-form solution is

$$T(t) = T_0 * e^{-\frac{A}{C_{thermal}}*(t-t_0)} \qquad (e5)$$

where $T_0$ is the temperature at the interface between the heat exchanger 32 and the absorber 2 at the instant t = to, that is $T(t_0) = T_0$, instant in which $P_u = 0$.

In a following instant $t_1 = \delta t + $ to, (e5) may be rewritten as

$$T(t_1) = T_0 * e^{-\frac{A}{C_{thermal}}*\delta t} \qquad (e6)$$

and so the temperature present at the interface decreases by $\Delta T$ after a time interval $\delta t$:

$$\Delta T = T(t_0) - T(t_1) = T_0 * \left( 1 - e^{-\frac{A}{C_{thermal}} \cdot \delta t} \right) \qquad (e7)$$

It is desirable that, when the temperature at the interface between the absorber 2 and the heat exchanger 32 reaches the temperature $T(t_1)$ the engine should still be capable of operating, that is, $T(t_1) \geq Tstart$, to achieve the aim of guaranteeing stable operation of the solar converter at least for a time interval $\delta t$.

From the formula (e7) the thermal capacity of the absorber is obtained, equal to

$$C_{thermal} = \frac{-A * \delta t}{\ln\left( 1 - \frac{\Delta T}{T_0} \right)} \qquad (e8)$$

Solely for the purpose of demonstrating that the equations shown lead to concrete results, an example is provided of preliminary functional data to dimensioning of the absorber:

- $\delta t = 300$ sec (5 min)
- Psteady=4500 Watt
- Pstart=2550 Watt
- $T_0 = 530$ °C;
- $\Delta T = T_0 - T(t_1)$ with $T(t_1) = Tstart \cong 250°C$;

- $A = \frac{Psteady - Pstart}{\Delta T} \approx 8.0$ Watt/°C

with A representing the angular coefficient of the interpolating line Pabs, represented in Fig. 2, the thermal capacity of the heat absorber is obtained as $C_{thermal} \approx 3000$ J/°C. If, for example, copper is selected as the material of which the absorber 2 is composed, a mass of the absorber $m_{absorber} \approx 8Kg$ is obtained.

Thanks to the present invention, a generator may remain stably operating for time intervals longer than 10s in which the solar radiation is insufficient to guarantee powering of the Stirling engine: Pric < Pabs + Ploss.

From the experiments performed, the above-mentioned assumption, that is that the power absorbed by the thermodynamic converter is approximating by a linear curve of the type Pabs = AT was found to be verified.

The secondary reflector 1 has a form, at least internally, tapering towards the head of the engine, defining a Y-axis of development, preferably having cylindrical symmetry.

The secondary reflector 1 according to the present invention does not have the capacity to absorb radiation, but only to reflect it.

Said reflector comprises a wall 11, preferably planar, having a barycentric aperture 12, through which enters the solar radiation concentrated by the primary reflector 4. This closing wall 11 is situated at the level of the maximum transverse cross-section of the secondary reflector.

Said reflector further comprises a second aperture 14 at the level of a minimum transverse cross-section thereof into which the absorber 2 is inserted.

As will become clearer in what follows, the absorber 2 has a cylindrically symmetrical shape comprising a first base 21 and a second base 24. In the second base 24, a cavity is formed into which the head of the Stirling engine 31 is inserted. For this reason the second base defines a circular rim having an internal diameter d24_i and an external diameter d24_e.

The diameter of the front surface, defining the first base 21, may vary according to the project characteristics, which will be better described below, between a diameter d21 minimum and maximum. This is obviously analogous for the second base 24. In particular the minimum diameter d21 of the first base 21 and the internal diameter d24_i of the second base 24 must be greater than or equal to the diameter dtesta of the Stirling engine head.

According to a particular aspect of the present invention, the wall 11 is located at the focus distance of reflection of the primary reflector. Therefore, the absorber 2 and accordingly the head of the engine 31 are out of focus, in particular beyond the focal distance F measured from the convex surface of the primary reflector 4, that is to a distance greater than F on the axis of the primary reflector.

The solar radiation therefore impinges upon the absorber 2, becoming distributed at least over the whole of the front surface 21 thereof, resolving the problems of the known art.

If the aperture 12 were arranged at a distance of less than F from the primary reflector, the aperture 12 would have to be larger to allow all the radiation to enter into the secondary reflector, involving a larger dispersion of radiation reflected by the absorber.

Beyond the focal point, the radiation irradiated by the reflector 4 has a tendency to widen. To the extent to which the absorber 2 is out of focus, the radiation impinges only upon the absorber 2, or also the internal surface 13 of the secondary reflector 1. The latter reflects on to the lateral surfaces of the absorber 2 the portion of the radiation that has not impinged upon the absorber 2 directly. Therefore the absorber is illuminated directly and/or indirectly, after one or more reflections on to the internal surface 13 of the secondary reflector 1.

The inlet aperture 12, preferably circular in shape and of diameter Dfmin$\leq$dric $\leq$ DFmax, is preferably positioned at the focal distance F from the primary reflector 4 and has the objective of causing entry of the concentrated power Pric by reducing the thermal losses Ploss.

DFmin e DFmax represent the maximum diameters of the focal region at the focal distance. These parameters depend on the care with which the primary reflector 4 has been manufactured.

Advantageously, because the thermal losses are due to convective and radiative losses and are directly proportional to the area of the aperture 12, by locating the wall 11, comprising the aperture 12, at the focal length F, a smallest possible aperture is obtained.

A further advantage results from the fact that the aperture 12, having a predefined diameter, allows filtration of excesses of illumination due to manufacturing imperfections of the primary reflector 4, protecting the engine from overheating. According to a first variant of the invention, it is advantageous to insert thermocouples into apposite slits 23, parallel with the lateral surfaces of the head of the Stirling engine 31, for measuring the temperature of the interface between the absorber 2 and the heat exchanger 32 in such a way as to control in a closed loop the solar tracking system in order to obtain better centering of the solar radiation within the aperture 12.

A further advantage of inserting the further thermocouples into slits 23 arises from the fact that, since they are not directly exposed to solar radiation, the sensors are not subject to intense thermal stresses, thus increasing its average lifetime.

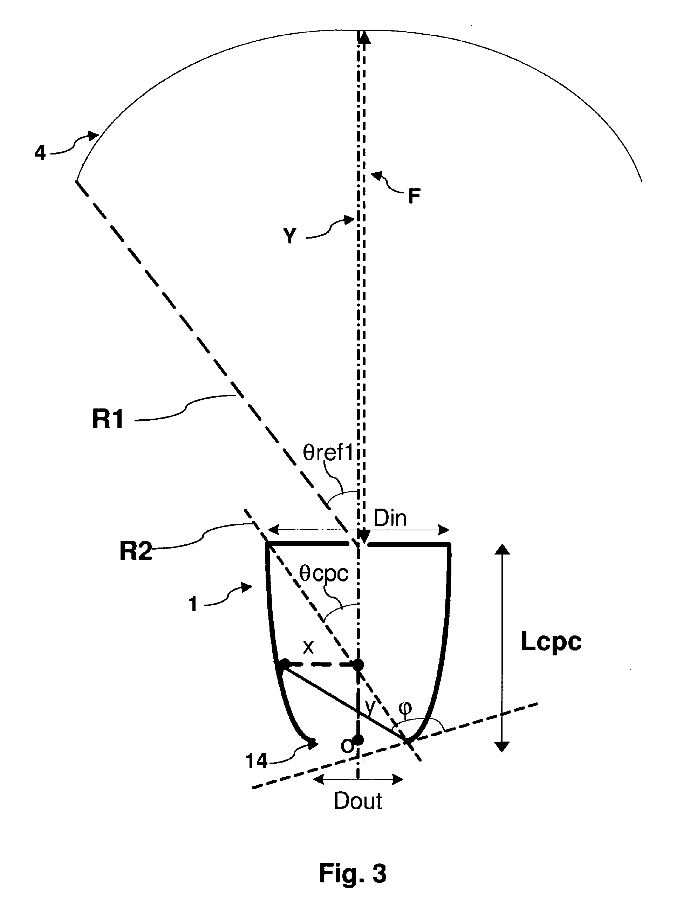

The secondary reflector 1 is preferably realised with use of a compound parabolic concentrator (cpc) that is, a rotating solid shape which tapers starting from the wall 11 towards the Stirling engine 3. In particular, the latter comprises at one end the wall 11 at the other end an aperture 14 wherein the absorber 2 is inserted. The latter, with reference Fig. 3, has a concentration ratio C equal to:

$$C = 1/\sin(\theta cpc)^2 = (Din / Dout)^2 \qquad (e9)$$

wherein $\theta cpc$, Din and Dout are respectively the angle of acceptance, the diameter of the wall 11, and the diameter of the aperture 14 for insertion of the absorber 2. In the absorber 2 is inserted the head 31 of the Stirling engine 3. The secondary reflector 1 is arranged perpendicularly to a barycentric point at the parabolic surface of the primary reflector 4, that is axially relative to the Y-axis.

As mentioned above, the aperture 12 is positioned at a distance F, coincident with the focal length of the parabolic surface of the primary reflector 4.

The secondary reflector 1 preferably optimises the transfer of the concentrated solar radiation by reflecting internally and thus by efficiently reconcentrating, the sun rays entering from the aperture 12, on to the heat absorber 2 positioned in direct contact with the head of the Stirling engine 31.

As will become clear below, the absorber 2, preferably having cylindrical symmetry, comprises at least one preferably annular peripheral part 24, which is inserted into the aperture 14 into which is inserted the absorber 2, which aperture is formed in the secondary reflector, opposite the surface 21. The head 31 of the Stirling engine is inserted into the cavity 25 formed in the absorber.

Otherwise expressed, the absorber 2 behaves as a plug for the aperture 14 of the secondary reflector 1, and in the absorber 2 a cavity 25 is formed into which the head 31 of the Stirling engine is inserted. In particular, the absorber 2 behaves as a cap, covering the head of the engine in the portion which, of said head, protrudes into the interior of the secondary reflector; stably connecting the head 31 to the secondary reflector 1.

According to the present invention, for dimensioning the secondary reflector $\theta cpc$, Dout are selected in such a way that the following conditions must be satisfied simultaneously:

- $\theta refl1° \leq \theta cpc < \dfrac{\pi}{2}$ i.e. $\theta cpc$ is greater than the angle of acceptance of the primary reflector $\theta refl1°$ and less than $\dfrac{\pi}{2}$, so as to direct all the sun rays reflected by the primary reflector towards the insertion aperture 14;

- Dout $\geq$ that the diameter of the annular part 24.

Din is dependent upon $\theta cpc$ and Dout according to the relationship Din = Dout / $\sin(\theta cpc)$.

According to a preferred embodiment, it is necessary for $\theta cpc = \theta refl1°$ and for Dout to be approximately equal to the outer diameter d24_e and of the annular surface 24 of the absorber.

Thus,

$$Din = d24\_e / sin(\theta refl1°).$$

The secondary reflector 1 is a three-dimensional object achieved by rotation of the section represented in Fig. 3 about the Y-axis.

The angle of acceptance $\theta refl1°$ of the primary reflector 4 is obtained from the intersection of the development axis Y with a line R1 passing through the end of the primary reflector and the centre of the aperture 12 for entry of the radiation reflected by the primary reflector (4), see Fig. 3.

The angle of acceptance $\theta cpc$ is obtained from the intersection of the Y-axis with a line R2 passing through two opposing points relative to the development axis Y, these points being arranged at opposite ends of the rotation solid defining the secondary reflector: see Fig. 3.

The shape of the section is described by the following two parametric equations, expressed as a function of the unknown variables x and y respectively determined perpendicularly and on said Y-axis, with the origin O, as a function of the common angular parameter $\varphi$ :

$$x = \frac{2*z*sin(\varphi - \theta cpc)}{1 - cos(\varphi)} - \frac{Dout}{2} \qquad (e10)$$

$$y = \frac{2*z*cos(\varphi - \theta cpc)}{1 - cos(\varphi)} \qquad (e11)$$

where

$$z = \frac{Dout}{2}*\left(1 + sin\left(\theta_{cpc}\right)\right) \qquad (e12)$$

$$2*\theta cpc \leq \varphi \leq \frac{\pi}{2} + \theta cpc \qquad (e13)$$

The parametric functions x,y and $\varphi$ are known from the art. The present invention teaches the use thereof in the specific case of a solar generator by introducing the parameter $\theta cpc$. These equations are therefore used in calculations, particularly in Matlab™, TracePro™ and Comsol™, for the purpose of simulating and understanding the optical, thermal and mechanical dynamics of the solar generator.

Having defined the shape of the secondary reflector 1, its maximum length Lcpc_max is

$$Lcpc\_max = \frac{Dout + Din}{tan(\theta cpc)}$$   (e14)

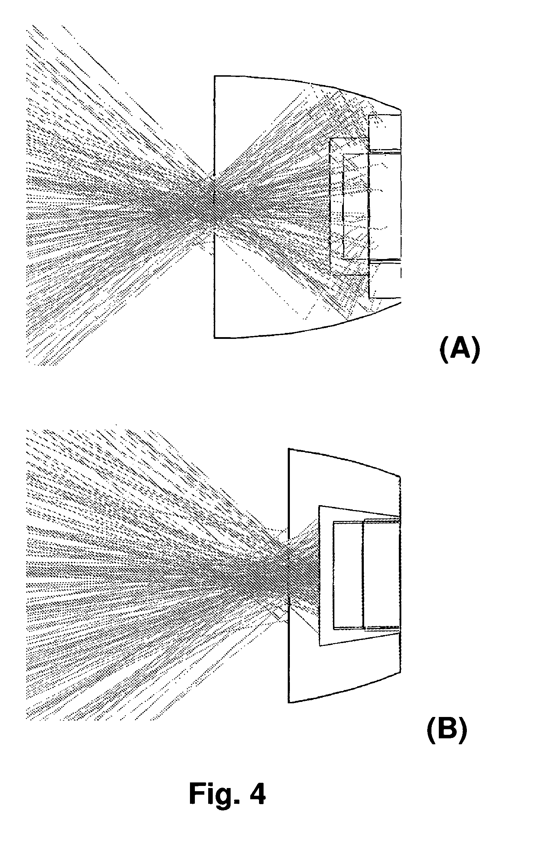

A secondary reflector 1 having axial development equal to Lcpc_max is represented in Fig. 4(A).

According to the present invention it is possible to limit the length of the axial development of the secondary reflector 1 without diminishing its the optical efficiency: that is, if Din, Dout and θcpc are equal, it is possible to obtain reflectors with lengths Lcpc less than $\frac{Dout + Din}{tan(\theta cpc)}$ of comparable optical efficiency.

When the length of the axial development Lcpc of the secondary reflector is reduced, the number of reflections has to be limited, possibly by designing the reflector and the absorber in such a way that there are no reflections.

In this case the following equation must be verified:

$$L < Lcpc \le L + Lh$$   (e15)

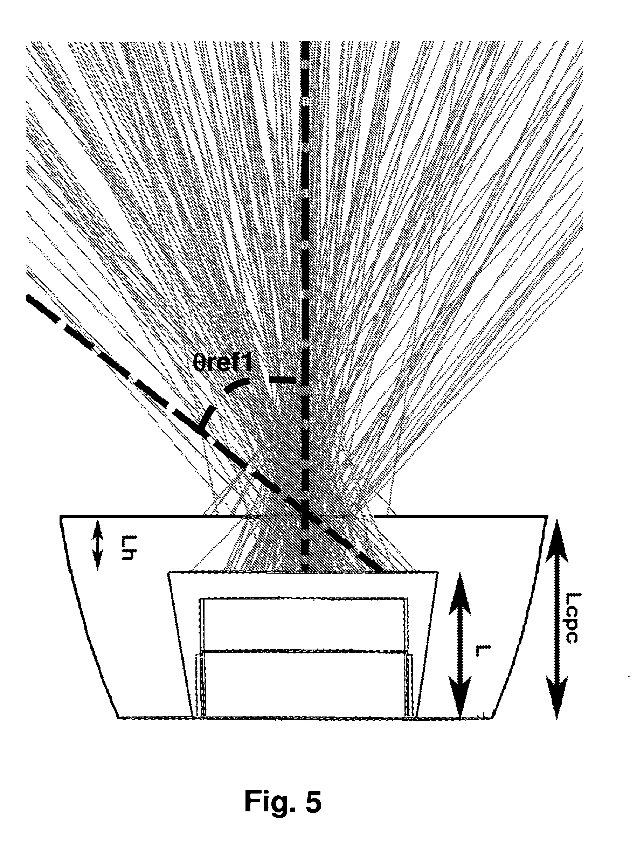

where, with reference to Fig. 5,

L is the axial length of the heat absorber, Lcpc is the axial length of the secondary reflector, and Lh is the difference between the first two:

$$Lh = Lcpc - L$$   (e16)

So in order for the absorber to be illuminated without reflections the diameter d21 of the front surface 21, the following must be satisfied:

$$\frac{d21}{2} = Lh * tan(\theta refl1°)$$   (e17)

Furthermore, because the absorber 2 is inserted into the interior of the secondary reflector 1, the maximum outer diameter d21, which the front surface 21 can assume, is delimited by the internal width of the secondary reflector 1 corresponding to the axial length of the absorber 2. In particular, using the parametric formula (e11), the axial length of the absorber is expressed as

$$L = \frac{2 * z * cos(\varphi_L - \theta cpc)}{1 - cos(\varphi_L)}$$   (e18)

where $\varphi_L$ is the parametric angle $\varphi$ calculated in correspondence with the height L of the absorber according to the equation (e11).

The beam of the secondary reflector 1 corresponding to an axial length L of the absorber is then $x_L = d21/2$, and using the parametric formulae (e10) and (e11), the maximum possible dimensions of the surface 21 are obtained:

$$d21 = 2 * L * tan(\varphi_L - \theta cpc) - Dout$$   (e19)

This equation defines the maximum value of Lh, on account of which direct illumination reaches only the absorber, and so substituting (e19) into (e17) we have:

$$Lh = \frac{L * tan(\varphi_L - \theta cpc) - Dout/2}{tan(\theta refl1°)} \qquad (e20)$$

Then, substituting (e20) into (e15), two limit values which Lcpc can assume are obtained, for the precise purpose of the absorber being irradiated only on the front surface 21, as illustrated by Fig. 4(B):

$$L < Lcpc \leq L + \frac{L * tan(\varphi_L - \theta cpc) - Dout/2}{tan(\theta refl1°)} \qquad (e21)$$

Accordingly, a limit length Lcpc_lim of the secondary reflector is identified as being equal to:

$$Lcpc\_lim = L + \frac{L * tan(\varphi_L - \theta cpc) - Dout/2}{tan(\theta refl1°)}$$

Thus, when Lcpc ≤ Lcpc_lim, the absorber has a shape which tapers towards the Stirling engine.
On the other hand, when Lcpc exceeds the value Lcpc_lim, the absorber tapers towards the primary reflector. In this case

$$Lcpc\_lim < Lcpc \leq \frac{Dout + Din}{tan(\theta cpc)} \qquad (e22)$$

wherein the irradiation of the heat absorber 2 occurs as follows: a portion of the solar rays reflected by the primary reflector 4 impinge directly upon the absorber 2, while another portion impinges upon it by means of at least one reflection on the secondary reflector 1, as shown in Fig. 4(A).
Then, having defined the length Lcpc of the secondary reflector 1, two different ways of irradiating the absorber 2 may be obtained. This comprises variations in the shape of the absorber 2, as will be illustrated in what follows.
Once the length of the axial development Lcpc of the secondary reflector 1 has been selected, the shape of the absorber must be optimised for the purpose of

- optimising the absorption of the radiation on one or more surfaces of the absorber;
- transferring the absorbed energy, in the form of heat, from said surfaces to the zone of contact with the heat exchanger of the Stirling engine which, in the example, has an annular shape.

Otherwise it is necessary to guarantee that the thickness of the absorber is not reduced too much in any areas, to enable a sufficient transmission of heat from the uptake surfaces towards the zone in which the heat is given up to the exchanger 32, in order that the Stirling engine 3 is able to operate correctly. This constraint is in contrast with the need to make the absorber as compact as possible to reduce the thermal losses thereof.
According to the present invention, following intensive experimentation, the following further design constraints have come to light with regard to the absorber dimensions:

- with reference to Fig. 1, it would be desirable for the thickness s of the absorber on the head of the engine to be the minimum possible, so as to minimise the heat conduction pathway to the peripheral part of the heat exchanger (32) of the engine head. In this regard, it has been observed that this thickness s cannot be small ad libitum, since this would cause localised overheating of the engine head;
- with reference to Fig. 1, the insertion part of the absorber, destined to come into contact with the peripheral part of the heat exchanger (32) of the engine head, must be of a sufficient thickness to guarantee low resistance to the passage of the heat flow towards the engine.

This dimensioning is further constrained by the thermal capacity of the absorber, that is, by its mass as calculated above.

As mentioned above, it is assumed that the minimum diameter d21 of the first base 21 and the internal diameter d24_i of the circular rim 24 is greater than or equal to the diameter dtesta of the engine head.

(e19) indicates the possible value of the maximum diameter of the first base 21, but the outer diameter d24_e of the second base 24 remains to be ascertained.

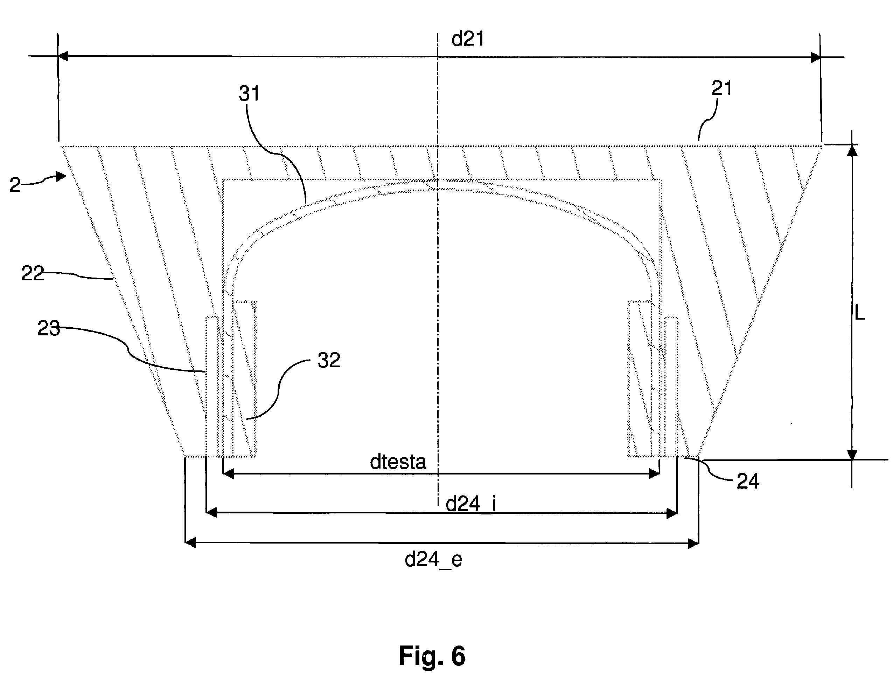

Fig. 6 represents an axial section of a variant heat absorber that is the subject of the present invention.

The general equation of thermal conduction (Fourier's law) is taken into consideration. The present invention also teaches how to use such an equation and how to select the parameters to be substituted into said equation:

$$W = \lambda \times \frac{(Tirr - Tint)}{L} \times S \qquad\qquad (e23)$$

wherein:

- W is the power transmitted from the zone exposed to solar radiation to the zone in direct contact with the heat exchanger of the Stirling;
- $\lambda$ is the thermal conductibility of the material of the absorber, for example copper, and is known;
- Tirr is the mean temperature of the surface exposed to solar radiation;
- Tint is the mean temperature of the interface between the absorber and the heat exchanger of the engine cylinder;
- S represents the area of the circular rim defined by the second base 24 and by the cavity included therein, via which the heat exchanger 32 of the head 31 of the Stirling engine 3 is contacted;
- L is the height of the heat absorber;

(e23) is resolved analytically and in a closed form by stipulating the folllowing:

- Tint is equal to Tsteady ,
- L is at least equal to the distance between the vault of the cylinder 31 and the position of the annular heat exchanger 32 of the Stirling engine, yet can be assimilated to the portion of the absorber which protrudes into the interior of the secondary reflector.
- Tirr is set as equal to Tmax, the maximum temperature that the preselected material, for example copper, is able to withstand without sustaining damage.

The specific parameters of the engine have the following values, with specific reference to the above-mentioned Microgen™ engine:

- W = 4500 Watt, i.e. equal to the steady-state power Psteady
- $\lambda$ = 400 W/m*K
- L= 80 mm,
- Tint = 823 °K (550°C)
- Tmax for copper is 1100 °K (827°C) and

$$S = \left( \frac{d24\_e^2 - dtesta^2}{4} \right) \pi$$

which is the area of the circular rim S, that is, the exchange surface between the absorber 2 and the heat exchanger 32 of the Stirling engine, for which the diameter dtesta of the head 31 of the Stirling engine 3 is dtesta=116 mm. Therefore, by substituting the above-mentioned parameters into the equation (e23), the minimum diameter d24_e for transmitting the steady-state power to the Stirling engine is calculated as:

$$d24\_e = 2 \times \sqrt{\frac{W \times L}{\lambda (Tmax - Tint) \times \pi} + \frac{dtesta^2}{4}} \approx 130 \text{ mm} \qquad (e24)$$

By this means, having selected a thermal capacity using (e8) and then the material constituting the absorber, the mass thereof is obtained and the front surface 21 defining the first base of the absiorber is connected to the second base 24 of the absorber, yielding a cylindrically symmetrical solid wherein the first base 21 is planar and has a diameter d21 and the second base is substantially a circular rim, due to the cavity formed therein for the purpose of inserting the head 31 of the Stirling engine 3.

In particular, this cylindrically symmetrical solid tapers from the first base 21 towards the second base 24 when the secondary reflector has axial development included in the limits defined by (e21). This first base 21 assumes a diameter of a value comprised between those obtained by (e17) and by (e19). Having stipulated the mass and the height of the absorber and having selected the diameter d21 from among those just cited, d24_e must assume a dimension smaller than d21 by taking on the shape described above.

In contrast, this cylindrically symmetrical solid tapers from the second base 24 towards the first base 21 when the absorber has axial development comprised within the limits of (e22); e d24_e assumes a value greater than or equal to that obtained by mean of (e24). Because the mass and the height L of the absorber are stipulated and the value d24_e, the diameter d21 is obtained as a consequence of this limitation of the mass of the absorber. It is precisely this that stipulates that the absorber in this second example tapers from the second base 24 towards the first 21.

According to an axial section of the absorber, said absorber may therefore present rectilinear, concave or convex lateral profiles 22 in relation to the above-mentioned connecting operation.

According to one embodiment, the heat absorber can be covered with a flexible film of material having selective properties capable of increasing the absorption of solar radiation and thus reducing the thermal emissions due to heating of the absorber. The use of this covering therefore enables the radiative losses of the secondary reflector to be appreciably reduced.

The secondary reflector 1 is preferably internally covered with a reflective surface which may preferably be glass or another reflective material with specular reflectance at least greater than 90% and resistant to temperatures above 200°C. Furthermore the secondary reflector 1 is externally covered with a refractory material so as to minimise convective and radiative thermal losses of the secondary reflector.

The advantages deriving from applilcation of the present invention are clear:

- With the use of the present invention it is made possible to improve the operation of a solar generator directly exposed to solar radiation, which generator is based on a Stirling engine, the head of which is exposed to the solar radiation with use of a suitable absorber.
- The absorber protects the cylinder head, guaranteeing to maintain the temperature of the head within the limits of operation of the engine, the present invention teaches to confer a suitable shape to the absorber depending on the shape of the secondary reflector.
- The present invention teaches how to dimension the thermal capacitor of the heat absorber in such a way that it succeeds both in storing the energy necessary for starting the Stirling engine in operation, and in supplying the heat necessary to maintain the Stirling engine in operation, even when, due to the concentrated solar radiation, the amount of heat is not sufficient for optimum operation of said engine;
- The present invention also teaches to dimension the secondary reflector in such a way as to optimise the operation thereof,
- The present invention also teaches a pre-existing Stirling engine, originally used for production of energy from the combustion of natural gas, teaching to obtain the characteristic curves thereof and to use them according to the purposes of the present invention.
- Also presented are an analytical method for dimensioning absorbers, and a practical example of application of the method.

**Claims**

1. Method for dimensioning a solar generation system comprising a solar radiation heat absorber (2) for a Stirling engine, said Stirling engine comprising an engine head (31) and a heat exchanger (32) surrounding said engine head (31), the absorber (2) comprising a cavity (25) shaped so as to be joined onto said head (31) of the engine and to transfer heat to said heat exchanger (32); the method being **characterised in** giving said absorber (2) such a mass as to guarantee stable operation of the Stirling engine during temporary periods of predefined duration wherein said solar radiation is insufficient to guarantee operation of the engine (Pric < Pabs + Ploss), the method, comprising the following steps:

- determining a Stirling engine absorbed thermal power as a function of the temperature T of the Interface between the heat exchanger (32) and the absorber (2) with the identification of at least one steady state running temperature value To corresponding to a steady state absorbed power value Psteady and the identification of a starting temperature value Tstart corresponding to an absorbed power value $P_{start}$,
- determining the thermal capacity $C_{thermal}$ of the absorber (2) by means of the following equation:

$$C_{thermal} = \frac{-A * \delta t}{\ln\left(1 - \frac{\Delta T}{T_0}\right)} \qquad (e8)$$

In such a way that the thermal capacity $C_{thermal}$ is capable of transferring the thermal power Psteady, present at time to, to the engine for a predefined interval of time $\delta t = t_1 - t_0$ *in such a way that* at time $t_1$ the operating temperature of the engine $T(t_1)$ is greater than or equal to $T_{start}$, where
- $\Delta T = T_0 - T(t_1)$ with $T(t_1)$ = Tstart and

- $A = \dfrac{Psteady - Pstart}{\Delta T}$ .

and wherein the mass m of the absorber is given by $C_{thermal}$ divided by the specific heat capacity of a material defining the absorber (2).

2. Method according to claim 1, wherein said absorber is comprised of a generation system comprising

- a primary reflector (4) defining an axis of focussing and a focal length (F),
- a secondary reflector (1), having an internal cavity with cylindrical symmetry defining an axis of development (Y) and having a cavity closing wall (11) wherein is located a first inlet aperture (12) for the radiation reflected by the primary reflector (4) and a second aperture (14) wherein said absorber (2) is capable of being attached, method comprising the step of positioning said first inlet aperture (12) at the focus point of the primary reflector (4), in such a manner that the absorber (2) is arranged along said axis (Y) at a distance from the primary reflector (4) greater than said focal length (F).

3. Method according to claim 2, wherein said internal cavity of the secondary reflector (1) tapers between a maximum cross section (Din) facing towards the primary reflector (4) and a minimum cross section (Dout) corresponding to said second aperture (14).

4. Method according to claim 3, wherein a maximum axial development Lcpc_max of said secondary reflector is given by the following equation:

$$Lcpc\_max = \frac{Dout + Din}{tan(\theta cpc)}$$

wherein Din is the minimum cross section; Dout is the maximum cross section and $\theta cpc$ is an angle of acceptance obtained from the intersection of the axis of development (Y) with a straight line (R2) joining two opposing points with respect to the axis of development (Y), with the points arranged at opposite ends of a rotation solid defining the secondary reflector.

5. Method according to claim 4, comprising the step of calculating a predefined limit value for the length Lcpc of the secondary reflector according to the following formula:

$$Lcpc\_lim = L + \frac{L * tan(\varphi_L - \theta cpc) - Dout/2}{tan(\theta refl1°)}$$

where $\varphi_L$ is the parametric angle $\varphi$ calculated at height L on the absorber, with L equal to the portion, along said axis of development (Y), of the absorber protruding into the secondary reflector, according to a parametric equation

$$L = \frac{2 * z * cos(\varphi_L - \theta cpc)}{1 - cos(\varphi_L)}$$

Wherein $\theta cpc$ is an angle of acceptance of the secondary reflector (1), Dout is the maximum cross section of the primary reflector and $\theta refl1°$ is the angle of acceptance of the primary reflector (4).

6. Method according to claim 5, wherein, when one development Lcpc of the secondary reflector exceeds said predefined limit value Lcpc_lim, comprising a step of shaping the absorber tapered towards the primary reflector and wherein, when one development Lcpc of the secondary reflector does not exceed said predefined limit value Lcpc_lim, comprising a step of shaping the absorber tapered towards the Stirling engine.

7. Solar generator system comprising

- a primary reflector (4) defining an axis of focussing and a focal length (F),
- a secondary reflector (1), having an internal cavity with cylindrical symmetry defining an axis of development (Y) and having a cavity closing wall (11) wherein is located a first inlet aperture (12) for the radiation reflected by the primary reflector (4) and a second aperture (14);
- a solar radiation heat absorber (2) capable of being attached to said second aperture (14),
- a stirling engine
said first inlet aperture (12) being located at the focus point (F) of the primary reflector (4), in such a manner that the absorber (2) is arranged along said axis of focussing (Y) at a distance from the primary reflector (4) greater than said focal length (F) and
**characterised in that** the absorber comprises a mass capable of guaranteeing a store of heat sufficient for stable operation of the Stirling engine during temporary periods of predefined duration, wherein said solar radiation is insufficient to power the Stirling engine (Pric < Pabs + Ploss) and **In that** it is dimensioned according to any of the method of claims 1 to 6.

8. A solar generator system according to claim 7, further comprising

- at least one thermocouple (23) located at the interface between said absorber (2) and said head (31) of the Stirling engine (3)
- means of pointing the generator towards the sun;
- means of controlling said means of pointing configured in order to control the direction of the generator based on a temperature measured by said at least one (23) thermocouple.

**Patentansprüche**

1. Verfahren zur Dimensionierung einer Solargeneratoranlage, beinhaltend einen die Sonnenstrahlung aufnehmenden thermischen Solarabsorber (2) für einen Stirlingmotor, wobei dieser Stirlingmotor einen Motorkopf (31) und einen Wärmetauscher (32), der den Motorkopf (31) umgibt, beinhaltet, wobei der Absorber (2) einen Hohlraum (25) beinhaltet, der so geformt ist, dass er auf dem Kopf (31) des Motors angebracht werden kann und Wärme an den Wärmetauscher (32) übertragen kann; wobei das Verfahren **dadurch gekennzeichnet ist, dass** der Absorber (2) mit einer Masse bemessen wird, die den stabilen Betrieb des Stirlingmotors über temporäre Zeitabschnitte vorbestimmter Dauer auch zu Zeiten gewährleisten kann, in denen die Sonnenstrahlung nicht ausreicht, um den Betrieb des Motors sicherzustellen (Pric < Pabs + Ploss), wobei das Verfahren die folgenden Schritte beinhaltet:

- Bestimmung der vom Stirlingmotor aufgenommenen thermischen Leistung als Funktion der Temperatur T der Grenzfläche zwischen dem Wärmetauscher (32) und dem Absorber (2) mit Ermittlung zumindest eines Dauerbetrieb-Temperaturwertes To, der einem Dauerbetrieb-Leistungsaufnahmewert Psteady entspricht, und Ermittlung eines Anlauftemperaturwertes Tstart, der einem Leistungsaufnahmewert $P_{start}$ entspricht;

- Bestimmung der thermischen Kapazität $C_{thermal}$ des Absorbers (2) anhand folgender Gleichung:

$$C_{thermal} = \frac{-A * \delta t}{\ln\left(1 - \frac{\Delta T}{T0}\right)} \qquad (e8)$$

In einer Weise, dass die thermische Kapazität $C_{thermal}$ in der Lage ist, die thermische Leistung Psteady, die zu einer Zeit to vorhanden ist, für ein vorbestimmtes Zeitintervall $\delta t = t_1 - t_0$ an den Motor zu übertragen, *und zwar derart,* dass zu einer Zeit $t_1$ die Betriebstemperatur des Motors $T(t_1)$ größer oder gleich $T_{start}$ ist, wobei

- $\Delta T = T_0 - T(t_1)$ mit $T(t_1) = Tstart$ und

- $A = \dfrac{Psteady - Pstart}{\Delta T}$

und worin die Masse m des Absorbers gegeben ist durch $C_{thermal}$ geteilt durch die spezifische Wärmekapazität des Materials, aus dem der Absorber (2) besteht.

2. Verfahren nach Anspruch 1, worin der Absorber Bestandteil eines Generatorsystems ist, das Folgendes beinhaltet:

- einen primären Reflektor (4), der eine Brennachse und eine Brennweite (F) definiert,
- einen sekundären Reflektor (1), der einen Innenhohlraum mit zylindrischer Symmetrie aufweist, die eine Ausdehnungsachse (Y) definiert, und der eine Abschlusswand (11) zum Verschluss des Hohlraums aufweist, in der eine erste Einlassöffnung (12) für die vom primären Reflektor (4) reflektierte Strahlung vorhanden ist, und der eine zweite Öffnung (14) aufweist, in welcher der Absorber (2) angebracht werden kann,
wobei das Verfahren den Schritt der Positionierung der ersten Einlassöffnung (12) am Brennpunkt des primären Reflektors (4) beinhaltet, so dass der Absorber (2) entlang der Achse (Y) in einer Entfernung vom primären Reflektor (4) angeordnet ist, die größer ist als die genannte Brennweite (F).

3. Verfahren nach Anspruch 2, worin sich der Innenhohlraum des sekundären Reflektors (1) zwischen einem dem primären Reflektor (4) zugewandten maximalen Querschnitt (Din) zu einem der zweiten Öffnung (14) entsprechenden minimalen Querschnitt (Dout) verjüngt.

4. Verfahren nach Anspruch 3, worin eine maximale axiale Ausdehnung Lcpc_max des sekundären Reflektors durch folgende Gleichung gegeben ist:

$$Lcpc\_max = \frac{Dout + Din}{tan(\theta cpc)}$$

worin Dout der minimale Querschnitt ist; Din der maximale Querschnitt ist und $\theta cpc$ ein Akzeptanzwinkel ist, der durch das Schneiden der Ausdehnungsachse (Y) mit einer geraden Verbindungslinie (R2) zwischen zwei relativ zu der Ausdehnungsachse (Y) einander gegenüberliegenden Punkten erhalten wird, wobei diese Punkte an gegenüberliegenden Enden eines Rotationskörpers liegen, der den sekundären Reflektor bildet.

5. Verfahren nach Anspruch 4, beinhaltend einen Schritt zur Berechnung eines vorbestimmten Grenzwertes für die Länge Lcpc des sekundären Reflektors nach der folgenden Formel:

$$Lcpc\_lim = L + \frac{L * tan(\varphi L - \theta cpc) - Dout/2}{tan(\theta refl1°)}$$

worin $\varphi_L$ der parametrisierte Winkel $\varphi$ ist, berechnet auf der Höhe L des Absorbers, mit L gleich dem entlang der Ausdehnungsachse (Y) liegenden Teilabschnitt des Absorbers, der sich in den sekundären Reflektor hinein erstreckt, gemäß einer parametrisierten Gleichung

$$L = \frac{2 * z * cos(\varphi L - \theta cpc)}{1 - cos(\varphi L)}$$

Worin θcpc ein Akzeptanzwinkel des sekundären Reflektors (1) ist, Dout der maximale Querschnitt des primären Reflektors ist und θrefl1° der Akzeptanzwinkel des primären Reflektors (4) ist.

6. Verfahren nach Anspruch 5, in dem, wenn eine Ausdehnung Lcpc des sekundären Reflektors den genannten vorbestimmten Grenzwert Lcpc_lim überschreitet, ein Schritt zur Formung des Absorbers enthalten ist, damit sich dieser zum primären Reflektor hin verjüngt, und in dem, wenn eine Ausdehnung Lcpc des sekundären Reflektors den genannten vorbestimmten Grenzwert Lcpc_lim nicht überschreitet, ein Schritt zur Formung des Absorbers enthalten ist, damit sich dieser zum Stirlingmotor hin verjüngt.

7. Solargeneratoranlage, Folgendes beinhaltend:

- einen primären Reflektor (4), der eine Brennachse und eine Brennweite (F) definiert,
- einen sekundären Reflektor (1), der einen Innenhohlraum mit zylindrischer Symmetrie aufweist, die eine Ausdehnungsachse (Y) definiert, und der eine Abschlusswand (11) zum Verschluss des Hohlraums aufweist, in der eine erste Einlassöffnung (12) für die vom primären Reflektor (4) reflektierte Strahlung vorhanden ist, und der eine zweite Öffnung (14) aufweist,
- einen die Sonnenstrahlung aufnehmenden thermischen Solarabsorber (2), der an der zweiten Öffnung (14) angebracht werden kann,
- einen Stirlingmotor.
wobei die erste Einlassöffnung (12) am Brennpunkt (F) des primären Reflektors (4) angeordnet ist, so dass der Absorber (2) entlang der Brennachse (Y) in einer Entfernung vom primären Reflektor (4) angeordnet ist, die größer ist als die genannte Brennweite (F), und
**dadurch gekennzeichnet, dass** der Absorber eine Masse beinhaltet, die in der Lage ist, ausreichend Wärme zu speichern, um den stabilen Betrieb des Stirlingmotors über temporäre Zeitabschnitte vorbestimmter Dauer zu gewährleisten, in denen die Sonnenstrahlung nicht ausreicht, um den Sterlingmotor zu betreiben (Pric < Pabs + Ploss), und dadurch, dass er gemäß einem der Verfahren nach den Ansprüchen 1 bis 6 dimensioniert ist.

8. Solargeneratoranlage nach Anspruch 7, ferner beinhaltend:

- zumindest ein Thermoelement (23), das an der Grenzfläche zwischen dem Absorber (2) und dem Kopf (31) des Stirlingmotors (3) angeordnet ist
- Mittel zur Ausrichtung des Generators in Richtung der Sonne;
- Mittel zur Steuerung der Ausrichtungsmittel, die dafür konfiguriert sind, die Richtung des Generators auf Grundlage einer von dem zumindest einen Thermoelement (23) gemessenen Temperatur zu steuern.

## Revendications

1. Un procédé de dimensionnement d'un système générateur solaire comprenant un absorbeur de chaleur de rayonnement solaire (2) pour un moteur Stirling, ledit moteur Stirling comprenant une culasse de moteur (31) et un échangeur de chaleur (32) entourant ladite culasse de moteur (31), l'absorbeur (2) comprenant une cavité (25) qui est conformée de manière à être accouplée sur ladite culasse (31) du moteur et à transférer la chaleur audit échangeur de chaleur (32); le procédé étant **caractérisé en ce qu'**il prévoit de donner audit absorbeur (2) une masse telle qu'elle permet de garantir un fonctionnement stable du moteur Stirling pendant des périodes temporaires de durée prédéfinie quand ledit rayonnement solaire ne suffit pas pour garantir le fonctionnement du moteur (Pric < Pabs + Ploss), le procédé comprenant les phases suivantes:

- détermination de la puissance thermique absorbée par le moteur Stirling en fonction de la température T de l'interface entre l'échangeur de chaleur (32) et l'absorbeur (2) avec identification d'au moins une valeur de température de fonctionnement en régime stationnaire $T_0$ correspondant à une valeur de puissance absorbée en régime stationnaire Psteady et identification d'une valeur de température de départ Tstart correspondant à une valeur de puissance absorbée $P_{start}$,
- détermination de la capacité thermique $C_{thermique}$ de l'absorbeur (2) par le biais de l'équation suivante :

$$C_{thermique} = \frac{-A * \delta t}{\ln\left(1 - \frac{\Delta T}{T0}\right)} \qquad (e8)$$

de manière à ce que la capacité thermique $C_{thermique}$ soit capable de transférer la puissance thermique $P_{steady}$, présente à l'instant $t_0$, au moteur pendant un intervalle de temps prédéfini $\delta t = t_1 - t_0$ afin qu'à l'instant $t_1$ la température de fonctionnement du moteur $T(t_1)$ soit supérieure ouégale à $T_{start}$, où
- $\Delta T = T_0 - T(t_1)$ avec $T(t_1) = T_{start}$ et

$$- A = \frac{Psteady - Pstart}{\Delta T}$$

et où la masse m de l'absorbeur est donnée par $C_{thermique}$ divisée par la capacité thermique spécifique d'un matériau définissant l'absorbeur (2).

2. Le procédé selon la revendication 1, dans lequel ledit absorbeur est compris dans un système générateur comprenant

- un réflecteur primaire (4) définissant un axe de focalisation et une distance focale (F),
- un réflecteur secondaire (1), ayant une cavité intérieure à symétrie cylindrique définissant un axe de développement (Y) et ayant une paroi (11) de fermeture de la cavité présentant une première ouverture d'entrée (12) pour le rayonnement réfléchi par le réflecteur primaire (4) et une deuxième ouverture (14) dans laquelle ledit absorbeur (2) peut être fixé,
le procédé comprenant la phase consistant à positionner ladite première ouverture d'entrée (12) au niveau du foyer du réflecteur primaire (4), de manière à ce que l'absorbeur (2) soit disposé le long dudit axe (Y) à une distance du réflecteur primaire (4) qui est supérieure à ladite distance focale (F).

3. Le procédé selon la revendication 2, dans lequel ladite cavité intérieure du réflecteur secondaire (1) se restreint entre une section transversale maximale (Din) orientée vers le réflecteur primaire (4) et une section transversale minimale (Dout) correspondant à ladite deuxième ouverture (14).

4. Le procédé selon la revendication 3, dans lequel un développement axial maximum Lcpc_max dudit réflecteur secondaire est donné par l'équation suivante:

$$Lcpc\ max = \frac{Dout + Din}{tan(\theta cpc)}$$

où Din est la section transversale minimale; Dout est la section transversale maximale et $\theta cpc$ est un angle d'admission obtenu par l'intersection de l'axe de développement (Y) avec une droite (R2) joignant deux points opposés par rapport audit axe de développement (Y), avec lesdits points disposés au niveau d'extrémités opposées d'un solide de rotation définissant le réflecteur secondaire.

5. Le procédé selon la revendication 4, comprenant la phase consistant à calculer une valeur limite prédéfinie pour la longueur Lcpc du réflecteur secondaire selon la formule suivante :

$$Lcpc\_lim = L + \frac{L * tan(\varphi L - \theta cpc) - Dout/2}{tan(\theta refl1°)}$$

où $\varphi_L$ est l'angle paramétrique $\varphi$ calculé à la hauteur L de l'absorbeur, avec L qui est égale à la portion, le long dudit axe de développement (Y), de l'absorbeur en saillie dans le réflecteur secondaire, selon une équation paramétrique

$$L = \frac{2 * z * cos(\varphi L - \theta cpc)}{1 - cos(\varphi L)}$$

où $\theta cpc$ est un angle d'admission du réflecteur secondaire (1), Dout est la section transversale maximale du réflecteur primaire et $\theta refl1°$ est l'angle d'admission du réflecteur primaire (4).

6. Le procédé selon la revendication 5, dans lequel, quand un développement Lcpc du réflecteur secondaire dépasse ladite valeur limite prédéfinie Lcpc_lim, il comprend une phase consistant à restreindre l'absorbeur vers le réflecteur primaire et dans lequel, quand un développement Lcpc du réflecteur secondaire ne dépasse pas ladite valeur limite prédéfinie Lcpc_lim, il comprend une phase consistant à restreindre l'absorbeur vers le moteur Stirling.

7. Un système générateur solaire comprenant

- un réflecteur primaire (4) définissant un axe de focalisation et une distance focale (F),
- un réflecteur secondaire (1), ayant une cavité intérieure à symétrie cylindrique définissant un axe de développement (Y) et ayant une paroi (11) de fermeture de la cavité présentant une première ouverture d'entrée (12) pour le rayonnement réfléchi par le réflecteur primaire (4) et une deuxième ouverture (14),
- un absorbeur de chaleur de rayonnement solaire (2) pouvant être accouplé à ladite deuxième ouverture (14),
- un moteur Stirling
ladite première ouverture d'entrée (12) étant située au niveau du foyer (F) du réflecteur primaire (4), de manière à ce que l'absorbeur (2) soit disposé le long dudit axe de focalisation (Y) à une distance du réflecteur primaire (4) qui est supérieure à ladite distance focale (F) et **caractérisé en ce que** l'absorbeur comprend une masse capable de garantir un stockage de chaleur suffisant pour le fonctionnement stable du moteur Stirling pendant des périodes temporaires de durée prédéfinie, quand ledit rayonnement solaire ne suffit pas pour alimenter le moteur Stirling (Pric < Pabs + Ploss), et **en ce qu'**il est dimensionné selon le procédé des revendications de 1 à 6.

8. Un système générateur solaire selon la revendication 7, comprenant en outre

- au moins un thermocouple (23) situé au niveau de l'interface entre ledit absorbeur (2) et ladite culasse (31) du moteur Stirling (3);
- des moyens de pointage du générateur vers le soleil ;
- des moyens de contrôle desdits moyens de pointage configurés pour contrôler la direction du générateur en fonction d'une température mesurée par ledit au moins un thermocouple (23).

**Fig. 1**

**Fig. 2**

**Fig. 3**

(A)

(B)

**Fig. 4**

**Fig. 5**

**Fig. 6**

EP 2 697 510 B1

**EP 2 697 510 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6735946 B
- US 7026722 B
- WO 2010045269 A
- US 2004031517 A
- WO 2005054654 A
- WO 0007055 A